Europäisches Patentamt

(19) European Patent Office

Office européen des brevets

(11) Numéro de publication: **0 043 751**
**B1**

(12) **FASCICULE DE BREVET EUROPEEN**

(45) Date de publication du fascicule du brevet:
**28.03.84**

(21) Numéro de dépôt: **81401005.4**

(22) Date de dépôt: **23.06.81**

(51) Int. Cl.³: **C 01 F 7/32**

(54) Nouveau procédé de préparation d'alumines de haute pureté à partir d'alun d'ammonium.

(30) Priorité: **01.07.80 FR 8014620**

(43) Date de publication de la demande:
**13.01.82 Bulletin 82/2**

(45) Mention de la délivrance du brevet:
**28.03.84 Bulletin 84/13**

(84) Etats contractants désignés:
**AT BE CH DE FR GB IT LI LU NL SE**

(56) Documents cités:
**DE - A - 2 419 544**
**DE - C - 933 752**
**FR - A - 1 520 669**
**FR - A - 2 139 172**

**JOURNAL OF APPLIED CHEMISTRY USSR, vol. 48, no.
2, février 1975, G.V. CHEBOTKEVICH: "Thermal
decomposition of ammonium alum", pages 415-417**

(73) Titulaire: **CRICERAM, 23, rue Balzac, F-75008 Paris (FR)**

(72) Inventeur: **Bachelard, Roland, 99, Grande Rue de la
Guillotière, F-69007 Lyon (FR)**
Inventeur: **Barral, Robert, 9, rue des Fleurs Les Hameaux
Serezin-du-Rhone, F-69360 St-Symphorien d'Ozon (FR)**

(74) Mandataire: **Pascaud, Claude et al, PECHINEY 28, rue de
Bonnel, F-69433 Lyon Cedex 3 (FR)**

ACTORUM AG

# Nouveau procédé de préparation d'alumines de haute pureté à partir d'alun d'ammonium

La présente invention concerne un nouveau procédé permettant de préparer des alumines de haute pureté à partir d'alun d'ammonium.

Les alumines de haute pureté sont préparées industriellement par décomposition thermique d'alun d'ammonium.

La préparation d'alumine à partir d'alun d'ammonium passe par une succession de réactions complexes: déshydratation de l'alun, dissociation thermique de l'alun anhydre conduisant au sulfate d'aluminium et, finalement, décomposition thermique de ce dernier.

Lorsque l'alun est chauffé sans précautions particulières, il commence par fondre dans son eau de cristallisation. Puis la solution s'évapore, ce qui provoque son épaississement progressif. Lorsque la saturation est atteinte, le produit cristallise. Au cours de cette phase, de la vapeur est emprisonnée dans le solide qui se forme. Cela provoque une expansion considérable en volume, qui aboutit finalement à la formation d'une masse extrêmement poreuse et légère qui présente l'apparence d'une meringue. L'alun anhydre se décompose ensuite par étapes sans que le volume apparent du solide connaisse de grand changement.

Habituellement, l'alun est disposé dans des creusets — généralement en silice — dans lesquels toutes les étapes sont réalisées successivement. Le traitement thermique est effectué soit dans des fours intermittents, soit dans des fours continus à circulation, du type de ceux utlisés pour la cuisson des articles en céramiques. Or la vitesse de décomposition du sulfate d'aluminium est lente dans ces conditions. Il en résulte qu'un temps de séjour prolongé est nécessaire pour mener la préparation à son terme. Pour toutes ces raisons, la productivité des fours est extrêmement faible et les installations pour une capacité de production donnée sont d'une taille importante.

D'autres solutions ont été proposées dans l'art antérieur. Le brevet britannique No 514538 décrit un procédé dans lequel la matière de départ est pulvérisée, dans un premier stade de traitement thermique, sous la forme d'une solution, d'une suspension ou d'un bain fondu contenant de l'eau, dans une colonne de calcination, au moyen d'air ou de vapeur, et dans lequel on fait ensuite passer les sels anhydres formés, dans un second stade de traitement thermique, le cas échéant après broyage (en suspension), dans un courant de gaz chauffés à haute température, dans une chambre de décomposition. Un tel procédé est très coûteux, de longue durée, et ainsi ne convient guère pour un emploi à l'échelle industrielle.

Il est en outre connu (DE-A No 2215594) d'injecter des aluns contenant de l'eau, au moyen d'air comprimé, directement dans une flamme de brûleur présentant une température de 1200 à 1600°C, et de les décomposer thermiquement de cette manière. Toutefois, ce procédé est, lui aussi, industriellement coûteux, et présente, de plus, l'in-convénient d'être très sujet à des incidents de marche.

Selon le brevet DE-A No 2419544, on chauffe l'alun sous la forme d'une poudre, au moyen de gaz chauds et on agglomère cette poudre sous forme de brique avant son entrée dans le deuxième stade de traitement thermique.

Ces procédés de la technique antérieure présentent de multiples inconvénients: les temps de séjour très longs ou difficiles à contrôler et les appareils de grande dimension qu'ils nécessitent entraînent une productivité faible; le produit est souvent pollué au cours du traitement; les incidents de marche sont fréquents, et il est parfois même préconisé de recourir à une opération séparée de briquetage.

Les alumines $\gamma$ et $\eta$, dites aussi alumines de transition, obtenues à partir d'alun d'ammonium par les procédés industriels de l'art antérieur, ont les caractéristiques suivantes:

— 5 résiduaire $\simeq$ 0,2%
— surface spécifique $<$ 125 m²/g
— densité en vrac $=$ $d_{app}$ $\simeq$ 0,15 g/cm³

L'alumine $\alpha$ ou corindon, obtenu par calcination de ces alumines de transition, a une densité en vrac ne dépassant pas 0,2 g/cm³.

Les alumines $\gamma$ et $\eta$ (alumines de transition) trouvent de nombreuses applications industrielles, notamment comme supports de catalyseurs, comme matière première pour la fabrication de monocristaux, comme charges dans les matières plastiques, pour le polissage des métaux et dans la réalisation de membranes poreuses.

Les alumines de transition trouvent encore une application industrielle comme matière de départ pour la fabrication d'alumine $\alpha$ ou corindon.

Pour certaines applications, comme par exemple la catalyse, il est souhaitable d'avoir des alumines de transition ayant une surface spécifique élevée, c'est-à-dire supérieure ou égale à environ 200 m²/g.

Pour d'autres applications, par exemple pour la fabrication de corindon, il est souhaitable d'avoir des alumines de transition ayant une densité en vrac plus élevée que celle des alumines dérivées d'alun d'ammonium préparées selon les procédés industriels de l'art antérieur, qui est de l'ordre de 0,15 g/cm³.

Le corindon est utilisé notamment pour la fabrication des tubes de lampes à vapeur de sodium haute pression, la fabrication d'aluminates pour l'obtention de luminophores, la fabrication d'outils de coupe pour l'usinage des métaux et la fabrication de biocéramiques.

Pour la plupart de ces applications, l'alumine $\alpha$ doit être mise en forme par une compression suivie d'un frittage. Dans de tels cas, si la pièce doit avoir des dimensions bien déterminées, il est souhaitable que le retrait au frittage soit le plus faible possible. Ce retrait est d'autant plus faible que la densité de l'alumine de départ est plus élevée.

Les procédés industriels de l'art antérieur ne permettaient pas l'obtention d'alumines α de haute pureté, c'est-à-dire dérivant d'alun d'ammonium, ayant une densité en vrac supérieure à 0,2 g/cm³. Or, à la très grande diversité des utilisations de ces alumines correspond une grande variété des desiderata concernant leurs caractéristiques physico-chimiques de densité, d'aire spécifique, de taux de corindon...

Il existe donc un besoin de disposer d'un procédé industriel de préparation d'alumines de haute pureté à partir d'alun d'ammonium offrant une très grande souplesse, notamment quant à la possibilité d'obtenir une grande variété des caractéristiques physico-chimiques des alumines.

Il existe également un besoin industriel de disposer d'un procédé de préparation qui soit économique et fiable d'alumines de haute pureté à partir d'alun d'ammonium.

La présente invention répond à de tels besoins et fournit un procédé de préparation d'alumines de haute pureté à partir d'alun d'ammonium dans lequel on effectue séparément la déshydratation de l'alun puis la décomposition thermique de l'alun déshydraté, caractérisé par le fait que, au cours de ladite décomposition thermique, on force un gaz chaud à traverser l'alun déshydraté disposé en couche de façon à extraire en continu les produits gazeux de la réaction, tout en empêchant la mise en mouvement éventuelle du produit solide de ladite couche par le vecteur gazeux.

L'alun déshydraté est porté à une température comprise entre 600 et 1100° C, si l'on veut préparer une alumine de transition, et à une température supérieure à 1100°C, si l'on veut préparer, outre l'alumine de transition, de l'alumine α.

Le gaz est forcé à traverser la couche d'alun déshydraté par poussée ou par aspiration.

Divers modes de réalisation de l'invention peuvent être envisagés, par exemple:

— l'alun déshydraté est disposé sur un support poreux et le gaz est forcé à le traverser de haut en bas;

— l'alun déshydraté est disposé en sandwich entre deux supports poreux et le gaz est forcé à le traverser latéralement ou bien de bas en haut.

Le procédé peut être réalisé de façon discontinue; dans ce cas, la couche d'alun est immobile: ou bien de façon continue: la couche d'alun est alors animée d'un mouvement de glissement à vitesse contrôlée le long des parois du réacteur.

Selon un mode de réalisation préféré de l'invention, les calories nécessaires à la transformation de l'alun déshydraté en alumine sont apportées par ledit gaz.

Le gaz forcé à travers la couche d'alun déshydraté peut être constitué par de l'air ou par des gaz de combustion, mais l'invention n'est pas limitée à ce choix.

La déshydratation peut être effectuée de diverses manières dont certaines sont connues en elles-mêmes. On peut, par exemple, chauffer l'alun qui fond dans son eau de cristallisation et l'évaporer. Cette méthode conduit à un alun très poreux et léger qui a l'apparence d'une meringue. Ce produit peut ensuite être émotté, voire même broyé, sans toutefois que sa densité en vrac dépssse 0,6. Les alumines obtenues, selon la présente invention, à partir d'un tel alun ont une densité en vrac faible, de l'ordre de 0,15 g/cm³.

Selon un autre mode de réalisation de l'invention, l'alun déshydraté suivant le mode opératoire décrit ci-dessus est ensuite compacté, pastillé ou granulé pour constituer un lit ayant une très forte porosité et une grande densité de remplissage.

Selon un autre mode de réalisation de l'invention, on effectue la déshydratation de l'alun d'ammonium en lit fluidisé avec un gaz sec porté à une température supérieure à la température de fusion de l'alun.

Selon un mode de réalisation préféré de l'invention, on effectue la déshydratation de l'alun d'ammonium de départ d'une façon nouvelle mise au point par la titulaire en chauffant ledit alun sous vide au contact d'une paroi portée à une température supérieure à la température de fusion de l'alun ou en utilisant un courant de gaz sec et en maintenant la pression partielle de vapeur d'eau à une valeur réduite.

D'une façon évidente, il existe une corrélation entre la température de l'alun en cours de déshydratation et la pression partielle de vapeur d'eau au-dessus dudit alun, que l'homme de l'art déterminera aisément.

On peut utiliser pour cette déshydratation un caloporteur ayant une température supérieure au point de fusion de l'alun, sans que la fusion de l'alun se produise. Il suffit en effet que la vitesse d'évaporation soit suffisante. Le caloporteur peut être par exemple de l'huile ou de la vapeur surchauffée.

L'absence d'expansion en volume de l'alun déshydraté conduit à une densité en vrac de ce produit ayant une valeur élevée, pouvant atteindre 1 g/cm³; de ce fait, cet alun déshydraté remplit avantageusement le réacteur, tout en formant une couche d'une grande perméabilité. Cet avantage, dû au bon remplissage du réacteur, est maintenu dans le présent procédé car, en travaillant selon l'invention, la vitesse de décomposition d'un tel produit est, de façon surprenante, aussi élevée que celle dé l'alun déshydraté expansé. Le gain de productivité du procédé de l'invention se trouve donc accru quand on part d'un alun déshydraté selon ce mode de réalisation préféré. En outre, l'alumine ainsi obtenue présente une meilleure coulabilité, sa manipulation est plus satisfaisante car elle est moins poussiéreuse, son encombrement est réduit du fait de sa densité supérieure à celle de la poudre. Il faut noter en outre que, le broyage en étant aisé, l'obtention d'un produit pulvérulent ne présente, le cas échéant, aucune difficulté.

Dans certains cas, afin de conférer à l'alumine des propriétés particulières, on ajoute à l'alun de départ des additifs spécifiques. Ce sont par exemple des oxydes métalliques qui donnent une coloration au monocristal, de la magnésie introduite sous forme de sels (sulfate double de Mg et ammonium ou acétate) qui conduit à la formation

de spinelles $Al_2O_3$–MgO présentant une bonne résistance à la croissance cristalline ou d'autres oxydes comme $Y_2O_3$ qui modifient les propriétés physiques de l'alumine. Le constituant alumine reste cependant largement prépondérant dans tous ces composés de l'invention qui a pour objet la préparation d'alumines et s'applique également à toute cette famille de produits.

La présente invention peut être mise en œuvre de plusieurs façons.

On peut décomposer la charge d'alun déshydraté par une calcination réalisée en discontinu dans un réacteur à lit fixe dans lequel l'alun disposé en couche d'égale épaisseur sur un support poreux est traversé *per descensum* par un gaz chaud circulant à une vitesse supérieure à la vitesse de fluidisation de ladite charge.

On peut aussi décomposer l'alun déshydraté par une calcination réalisée en continu dans un réacteur à lit coulant dans lequel l'alun, se déplaçant entre deux parois poreuses équidistantes, est balayé transversalement par un gaz chaud entrant par l'une des parois poreuses et sortant par l'autre.

Ces deux modes de réalisation de l'invention seront à présent décrits plus en détail.

Selon un mode de réalisation de l'invention dans lequel l'alun déshydraté est disposé sur un support poreux et le gaz est forcé à le traverser de haut en bas, on place dans un réacteur, par exemple un four à cuve réfractaire, l'alun déshydraté sur un support poreux. Des gaz entrants sont chauffés et forcés à traverser la couche d'alun déshydraté au moyen d'un brûleur. Les gaz sortant du réacteur entrent dans une colonne d'absorption où ils sont traités afin d'éliminer les produits de décomposition qui sont évacués. Les gaz sortant de la colonne d'absorption sont évacués.

Selon le mode de réalisation en continu de l'invention, dans un réacteur à lit coulant dans lequel l'alun déshydraté se déplace entre deux parois poreuses et est balayé transversalement par le gaz chaud, l'alun déshydraté est alimenté dans un appareil de calcination en lit drainé travaillant en continu. Cet appareil de calcination comporte deux parois poreuses équidistantes entre lesquelles glisse l'alun déshydraté. Ce lit coulant d'alun déshydraté est parcouru transversalement par un fort courant de gaz chauds produits par des brûleurs situés à différents niveaux derrière la paroi poreuse dans une enceinte. Des cloisons étanches séparent les gaz dont les températures sont différentes et croissent vers le bas. En traversant la couche de grains, les gaz de chauffage entraînent les produits gazeux de décomposition sans pouvoir entraîner le solide immobilisé transversalement entre les deux parois poreuses. Les effluents s'échappent au travers de la seconde paroi poreuse et sont collectés dans une gaine pour être neutralisés dans l'appareil et évacués.

Le solide est progressivement décomposé et transformé en alumine qui sort en continu sous forme de granulés par le bas de l'appareil.

En travaillant selon le procédé de l'invention, on améliore l'échange thermique pour apporter des calories nécessaires à la décomposition des sulfates et on améliore l'échange de matière, d'où une productivité accrue.

Le procédé de la présente invention offre des avantages multiples: tout en conduisant à une productivité accrue, il permet l'obtention industrielle d'alumines de transition de haute pureté (treneur en S résiduaire inférieur à 0,15%) pouvant avoir une surface spécifique élevée, supérieure à 125 m²/g, et/ou une densité en vrac élevée, supérieure à 0,2 g/cm³.

Un autre avantage très important de l'invention réside dans le fait que les alumines de transition préparées selon le présent procédé sont très réactives vis-à-vis de la transformation en corindon. A titre d'exemple, alors qu'il était nécessaire de calciner une alumine de transition de la technique antérieure pendant 2 à 3 h pour obtenir du corindon, il suffit de calciner une alumine de transition obtenue selon l'invention pendant ¼ h pour obtenir le même résultat. Le procédé de l'invention permet l'obtention économique de corindon ayant un poids spécifique en vrac supérieur à 0,4 g/cm³, alors que le corindon obtenu par les techniques industrielles de l'art antérieur avait un poids spécifique en vrac de l'ordre de 0,2 g/cm³.

En outre, selon l'invention, il est possible de passer de l'alun déshydraté au corindon sans décharger, alors que, dans les installations de la technique industrielle de l'art antérieur, deux passages étaient nécessaires.

Un avantage supplémentaire du procédé réside dans la possibilité d'obtention d'alumine ayant des caractéristiques physico-chimiques variables, ces dernières dépendant essentiellement des paramètres du traitement thermique. Par exemple, une augmentation de la température de calcination entraîne une diminution de la surface spécifique de l'alumine, toutes conditions égales par ailleurs.

Le procédé de l'invention allie donc une productivité accrue à la possibilité de préparer de nouvelles qualités d'alumine.

Les exemples suivants illustrent l'invention.

*Exemple 1 :*

Dans un premier temps, on procède à la déshydratation de l'alun d'ammonium. Pour cela, des cristaux d'alun sont placés dans un ballon rotatif relié à une pompe à palettes. Lorsque la pression résiduaire de l'enceinte atteint 1/10 mm de mercure, l'appareil est mis en rotation, puis plongé dans un bain d'huile chauffé à 100°C. Au bout de 30 min, la température du bain d'huile est progressivement portée à 150°C. A ce stade, le chauffage est maintenu pendant 8 h. Pendant le traitement, l'eau qui sort de l'alun est condensée dans un ballon de réception plongé dans la glace.

A l'issue de ce traitement, l'alun a perdu environ 45% de sa masse initiale et présente, en diffraction X, le spectre de l'alun déshydraté. Les grains ont conservé leur habitus et constituent une poudre dont la densité de remplissage est de 0,65 kg/dm³.

On effectue ensuite la décomposition thermique de ce produit. Dans ce but, il est repris pour être disposé sous la forme d'une couche d'une épaisseur d'environ 7 cm sur une grille poreuse en céramique, elle-même placée dans la section droite d'un réacteur cylindrique en inconel.

Un enroulement chauffant entoure le réacteur et sert également à préchauffer de l'air filtré qui est introduit dans l'appareil au-dessus du lit d'alun déshydraté. Le débit d'air admis est de 1,4 nM³h·dm⁻² de section du réacteur. Un thermocouple placé dans le produit permet de programmer le traitement thermique.

Celui-ci comporte une montée rapide à 925°C, suivie d'un maintien en palier à cette température pendant 3 h.

Dès que la température dans le produit dépasse 400°C, il y a émission de fumées blanches qui sont entraînées par le vecteur gazeux et qui se condensent sur les parois d'un échangeur tubulaire vertical en verre. Les parties gazeuses non condensées sont évacuées vers un évent. Lorsque la température atteint son niveau maximal, les concrétions solides déposées dans le condenseur se transforment en produits visqueux qui tombent dans un ballon de réception où ils sont recueillis en fin d'opération pour être neutralisés, puis rejetés.

Pendant toute la durée du traitement, la perte de charge dans le lit ne dépasse pas 40 g/cm². A l'issue de la calcination, le produit est recueilli après refroidissement par aspiration. Il se présente sous la forme d'une poudre blanche en grains qui ont encore conservé leur morphologie de départ. La densité en vrac de ce produit est de 0,35. Son aire spécifique est de 195 m²/g. Il est constitué d'alumine de transition de variété η dont la pureté est excellente. En effet, le taux de soufre résiduaire est inférieur à 0,1%.

Afin d'évaluer la réactivité de ce produit vis-à-vis de sa transformation en corindon, un échantillon est soumis à un test de calcination dans les conditions suivantes:

— température: 1200°C
— durée: 30 min
— atmosphère: air ambiant

A l'issue de ce traitement, on mesure l'aire spécifique BET et on dose le corindon formé par diffraction X. A titre de comparaison, on réalise la même opération sur une alumine ex-alun fabriquée industriellement selon la technique antérieure consistant à placer l'alun dans des têts en silice, à le fondre, puis à le décomposer à une température qui doit atteindre 1150°C, opération à l'issue de laquelle on recueille une alumine γ qui se caractérise par une aire spécifique BET de 100 m²/g et par une densité en vrac de 0,15. Les résultats suivants sont obtenus:

*(Tableau en tête de la colonne suivante)*

La nouvelle technique de préparation que nous désignons par calcination en lit drainé permet donc d'obtenir des alumines à surface spécifique élevée présentant une réactivité très améliorée vis-à-vis de la formation de corindon.

| Produit de départ (alumine de transition) | Présentation: densité en vrac (g/cm³) surface BET (m²/g) % S résiduaire | Alumine de l'art antérieur | Alumine selon le présent brevet |
|---|---|---|---|
| | | poudre 0,15 100 0,2 | grains 0,35 195 <0,1 |
| Après calcination à 1200°C pendant 30 min | surface BET (m²/g) % Al₂O₃ α | 48 49 | 8,4 92 |

*Exemple 2:*

Une charge d'alun est traitée dans un four à micro-ondes à magnétron travaillant à la fréquence de 2450 MHz. L'appareil est équipé d'une sole tournante sur laquelle sont placés les récipients recevant les cristaux d'alun.

Dans ces conditions, le produit fond, puis se déshydrate en donnant lieu à une forte expansion en volume désignée sous le nom de meringage.

La meringue d'alun déshydraté est reprise pour être broyée et passée au tamis à la maille de 420 μm. On obtient de cette manière une poudre dont la densité de remplissage est de 0,34.

Ce produit est placé dans le réacteur en inconel décrit dans l'exemple 1 sous la forme d'une couche d'une épaisseur de 7 cm.

Un débit d'air sec de 1050 l/h × dm² est forcé au travers du lit ainsi constitué, ce qui engendre une perte de charge ne dépassant pas 30 g/cm².

La température du produit est rapidement portée à 975°C où elle est maintenue pendant 5 h. Pendant la décomposition de l'alun, la perte de charge commence par s'élever pour atteindre au maximum 90 g/cm², puis elle redescend et, en fin d'essai, se stabilise à 10 g/cm².

Après déchargement, on recueille de l'alumine η pulvérulente dont la densité en vrac est de 0,16 kg/dm³ et l'aire spécifique BET de 156 m²/g.

*Exemple 3:*

De l'alun d'ammonium est fondu dans un appareillage en verre pour éviter la contamination que pourrait entraîner le contact avec un récipient métallique.

Il est ensuite déshydraté par atomisation dans un courant d'air chaud. L'installation de déshydratation est également réalisée en verre.

On obtient de cette manière une poudre très dispersée d'alun déshydraté dont la densité de remplissage est de 0,10.

Le réacteur en inconel décrit dans les exemples précédents est chargé avec ce produit de manière à former une couche de 7,5 cm d'épaisseur.

La décomposition est effectuée dans les conditions habituelles avec un débit d'air de 1050 l/h × dm².

La température maximale imposée est de 950°C et elle est maintenue pendant seulement 2½ h. En

dépit de ce traitement court à température relativement basse, le produit recueilli est de l'alumine $\eta$ ne contenant pas plus de 0,17% de soufre résiduaire. L'aire spécifique de cette poudre est de 169,3 m²/g. Une caractéristique particulière à cette alumine lui est conférée par l'atomisation de l'alun. Ce procédé, en effet, conduit à l'obtention de poudres très légères, puisque la densité de remplissage de cette alumine ne dépasse pas 0,065 kg/cm³.

*Exemple 4:*

De l'alun d'ammonium en cristaux d'un diamètre équivalent de l'ordre de 1 mm est placé dans un réacteur bicône, rotatif, en acier émaillé. Cet appareil est muni d'une double paroi dans laquelle peut circuler un fluide caloporteur. En outre, il est relié à une pompe à anneau liquide capable de réaliser le vide dans l'enceinte.

Lorsque la pression résiduelle atteint 30 mm de mercure, une circulation d'eau chaude est admise dans la jaquette. Dans un premier temps, le produit est porté à 85°C et cette température est maintenue pendant 6 h. Ce premier traitement permet d'éliminer environ 75% de l'eau de cristallisation de l'alun.

La température est ensuite augmentée progressivement en surchauffant l'eau par une injection de vapeur de manière à amener la charge vers 130°C. Après une durée totale de traitement de 24 h, on recueille un produit pratiquement anhydre dont la densité en vrac est d'environ 0,6 kg/dm³. Il se présente en grains pseudomorphes de l'alun de départ.

Pour effectuer la décomposition de l'alun, on dispose d'un réacteur cylindrique vertical, briqueté, à l'intérieur duquel est aménagée une grille-support horizontale en matériau céramique, perforée de nombreux orifices. Cette grille est recouverte d'une couche de plusieurs centimètres de billes d'alumine de 5-6 mm de diamètre dont le rôle est de retenir les grains d'alun et d'éviter le contact direct entre celui-ci et des matériaux susceptibles de le souiller.

Le chauffage de l'ensemble est assuré par la combustion de propane dans un brûleur à flamme plate placé à la partie supérieure du réacteur dans le couvercle. Le réacteur proprement dit et son couvercle sont liés de manière étanche grâce à un joint refroidi. Cette disposition permet de réaliser une surpression au-dessus du lit d'alun et de forcer les gaz de combustion à le traverser.

Après avoir drainé la couche d'alun, les gaz entraînant les produits de décomposition entrent au sommet d'une colonne d'absorption où ils sont tout d'abord trempés par pulvérisation d'eau, puis lavés avec une solution diluée de soude ruisselant dans un garnissage.

Enfin, ils sont rejetés à l'atmosphère à l'aide d'un ventilateur.

Ce dispositif a été alimenté avec de l'alun déshydraté ci-dessus, de manière à former un lit d'épaisseur régulière sur les billes d'alumine. La charge est de 400 g d'alun par décimètre carré de section.

Le débit d'air admis au brûleur est constant et égal à 1,3 Nm³/h × dm² de section. Une programmation proportionne le débit de propane en fonction du profil thermique souhaité.

Dans le cas présent, la charge a tout d'abord été portée à 840°C, maintenue pendant 1 h à cette température, puis le chauffage a été poussé pour atteindre 970°C où un palier d'une durée de 2 h a été effectué. A l'issue de ce traitement, le brûleur est arrêté, mais l'air est maintenu afin d'accélérer le refroidissement.

Le couvercle est ensuite retiré, ce qui permet d'accéder à la charge qui est récupérée pratiquement sans perte par succion.

Dans ce cas, la productivité est de 85 g d'alumine par décimètre carré de réacteur et par opération, soit environ 15 g $Al_2O_3$/h × dm². Ainsi un appareil dont la section utile serait de 400 dm² (diamètre 2,25 m) produirait, dans ces conditions, environ 50 t/an en service continu.

Le produit obtenu est de l'alumine $\eta$ dont l'aire spécifique est d'environ 145 m²/g. Le taux de soufre résiduaire ne dépasse pas 0,15%. La densité en vrac du produit brut en granulés est d'environ 0,35 kg/dm³. La réactivité de cette alumine vis-à-vis de sa transformation en corindon a été testée selon le processus décrit dans l'exemple 1.

Après calcination à 1200°C pendant 30 min, la surface spécifique est tombée à 6,5 m²/g pour un taux de corindon de 93%, ce qui témoigne d'une réactivité très supérieure à celle des alumines ex-alun industrielles, comme cela est montré dans l'exemple 1.

*Exemple 5:*

L'alun d'ammonium est déshydraté suivant la technique utilisée dans l'exemple précédent.

Il est ensuite transféré dans le réacteur décrit dans l'exemple précédent.

La charge est cette fois de 800 g d'alun déshydraté par décimètre carré.

La calcination est conduite dans les mêmes conditions selon un protocole de chauffage qui prévoit cette fois:

— une montée rapide à 97°C avant stabilisation pour
— un palier de 45 min, suivi à son tour de
— une montée à 1250°C, terminée par
— un palier de 3 h 50 min à cette température

Après refroidissement sous balayage d'air, on retire du réacteur des granulés pseudomorphes de l'alun engagé. Il s'agit d'alumine de haute pureté (99,98% de $Al_2O_3$) titrant 93,4% de corindon pour une aire spécifique de 3,6 m²/g. Le taux de soufre résiduaire est de 150 ppm. La densité en vrac de ce produit est de 0,55 kg/dm³. Dans ces conditions, la productivité du réacteur atteint près de 20 g $Al_2O_3$ $\alpha$/h × dm² soit environ 110 t/an pour un appareil de 3 m de diamètre travaillant sans interruption.

*Exemple 6:*

Des cristaux d'alun d'ammonium dont la granulométrie est comprise entre 500 µm et 2,5 mm sont introduits dans un lit fluidisé à trois étages. Le produit pénètre dans le premier étage à température ambiante. Il est mis en fluidisation par de l'air sec entrant à 105°C à la vitesse de 1,4 m/s⁻¹. Le volume de cette première chambre est tel que le produit y séjourne pendant 1 h. Il passe ensuite dans le deuxième étage alimenté dans les mêmes conditions avec de l'air chauffé à 130°C et y séjourne encore 1 h. Enfin, il atteint le dernier étage dans lequel la fluidisation est assurée par de l'air à 180°C. Au bout de 1 h de temps de séjour moyen, on recueille des granulés isomorphes de l'alun de départ et dont 95% de l'eau de cristallisation a été éliminée. Ce produit sert à alimenter le réacteur décrit dans l'exemple 4. Selon le protocole de traitement thermique adopté, les résultats sont ceux de l'un des exemples 4 ou 5.

## Revendications

1. Procédé de préparation d'alumines de haute pureté à partir d'alun d'ammonium, dans lequel on réalise séparément la déshydration de l'alun, puis la décomposition thermique de l'alun déshydraté, caractérisé par le fait que, au cours de ladite décomposition thermique, on force un gaz chaud à traverser l'alun déshydraté disposé en couche de façon à extraire en continu les produits gazeux de la réaction, tout en empêchant la mise en mouvement éventuelle du produit solide de ladite couche par le vecteur gazeux.

2. Procédé selon la revendication 1, caractérisé par le fait que la déshydratation est réalisée sous vide au contact d'une paroi portée à une température supérieure à la température de fusion de l'alun.

3. Procédé selon la revendication 1, caractérisé par le fait que la déshydratation est réalisée en lit fluidisé avec un gaz sec porté à une température supérieure à la température de fusion de l'alun.

4. Procédé selon la revendication 1, caractérisé par le fait que la décomposition thermique de la charge d'alun déshydraté est effectuée par une calcination réalisée en discontinu dans un réacteur à lit fixe dans lequel l'alun, disposé en couche d'égale épaisseur sur un support poreux, est traversé *per descensum* par un gaz chaud circulant à une vitesse supérieure à la vitesse de fluidisation de ladite charge.

5. Procédé selon la revendication 1, caractérisé par le fait que la décomposition thermique de l'alun déshydraté est effectuée par une calcination réalisée en continu dans un réacteur à lit coulant dans lequel l'alun se déplaçant entre deux parois poreuses équidistantes est balayé transversalement par un gaz chaud entrant par l'une des parois poreuses et sortant par l'autre.

## Patentansprüche

1. Verfahren zur Herstellung von Aluminiumoxiden hoher Reinheit aus Ammoniumalaun, bei dem man gesondert die Entwässerung des Alauns und dann die thermische Zersetzung des entwässerten Alauns durchführt, dadurch gekennzeichnet, dass man im Lauf dieser thermischen Zersetzung ein heisses Gas zum Durchströmen des als Schicht angeordneten entwässerten Alauns derart treibt, dass die gasförmigen Produkte der Reaktion kontinuierlich abgezogen werden, dabei aber die eventuelle Inbewegungssetzung des festen Produkts dieser Schicht durch den Gastrom verhindert wird.

2. Verfahren nach dem Anspruch 1, dadurch gekennzeichnet, dass die Entwässerung im Vakuum im Kontakt mit einer auf eine Temperatur über der Schmelztemperatur des Alauns gebrachten Wand durchgeführt wird.

3. Verfahren nach dem Anspruch 1, dadurch gekennzeichnet, dass die Entwässerung in Wirbelschicht mit einem trockenen, auf eine Temperatur über der Schnmelztemperatur des Alauns gebrachten Gas durchgeführt wird.

4. Verfahren nach dem Anspruch 1, dadurch gekennzeichnet, dass die thermische Zersetzung der Charge entwässerten Alauns durch eine Kalzination erfolgt, die diskontinuierlich in einem Festbettreaktor durchgeführt wird, in dem der als Schicht gleicher Dicke auf einem porösen Träger angeordnete Alaun *per descensum* von einem heissen Gas durchströmt wird, das mit einer höheren Geschwindigkeit als der Fluidisierungsgeschwindigkeit dieser Charge zirkuliert.

5. Verfahren nach dem Anspruch 1, dadurch gekennzeichnet, dass die thermische Zersetzung des entwässerten Alauns durch eine Kalzination erfolgt, die kontinuierlich in einem Fliessbettreaktor durchgeführt wird, in dem der sich zwischen zwei porösen äquidistanten Wänden verlagernde Alaun quer von einem heissen Gas überstrichen wird, das durch eine der porösen Wände eintritt und durch die andere austritt.

## Claims

1. Process for the preparation of high purity aluminas from ammonium alum, comprising the separate operations of dehydration of alum and then thermal decomposition of the dehydrated alum, characterised in that, during the said thermal decomposition, a hot gas is forced through the dehydrated alum arranged in a layer, so as to extract the gaseous reaction products continuously, while at the same time preventing the possibility of the solid product in the said layer being moved by the vector gas.

2. Process according to claim 1, characterised in that the dehydration is carried out *in vacuo* in contact with a wall heated to a temperature above the melting point of the alum.

3. Process according to claim 1, characterised in that the dehydration is carried out in a fluidised bed with a dry gas heated to a temperature above the melting point of the alum.

4. Process according to claim 1, characterised that the thermal decomposition of the charge of dehydrated alum is effected by calcination carried out batchwise in a fixed-bed reactor in which a hot gas circulating at a rate greater than the rate of fluidisation of the said charge passes *per descen-*

*sum* through the alum arranged in a layer of even thickness on a porous support.

5. Process according to claim 1, characterised in that the thermal decomposition of the dehydrated alum is effected by calcination carried out continuously in a moving-bed reactor in which the alum moving between two equidistant porous walls is swept transversely by a hot gas entering through one of the porous walls and leaving through the other.